# FASCICULE DE BREVET EUROPEEN

(11) **EP 1 163 832 B1**
(45) Date de publication et mention de la délivrance du brevet: **13.10.2004**
(21) Numéro de dépôt: 01440154.1
(22) Date de dépôt: 05.06.2001
(51) Int. Cl.: A01D 34/535

(54) **Machine de coupe**
Böschungsmäher
Cutting machine

(30) Priorité: 16.06.2000 FR 0007721
(43) Date de publication de la demande: 19.12.2001
(73) Titulaire: Kuhn-Audureau S.A., 85260 La Copechagniere (FR)
(72) Inventeur: Peterschmitt, Mickael, 85300 Le Perrier (FR); Vallat, Didier, 85000 La Roche sur Yon (FR); Rostoucher, Guy, 85170 Belleville Sur Vie (FR)
(74) Mandataire: Andres, Jean-Claude

(56) Documents cités:
- EP-A- 0 954 955
- FR-A- 2 277 624
- GB-A- 2 307 630
- US-A- 5 003 759
- US-A- 6 000 205

## Description

La présente invention concerne une machine de coupe comportant un bâti pouvant être accroché à un tracteur et portant un mécanisme de coupe comprenant un rotor de grande section qui est muni de couteaux qui sont montés sur des axes disposés dans des poches prévues dans ledit rotor.

Les machines de ce genre sont utilisées notamment pour la coupe de broussailles et d'arbustes.

Sur une telle machine qui est décrite dans la demande de brevet FR 2 277 624, le rotor est constitué par un profilé creux tubulaire avec des ouvertures pour le passage des couteaux. Des éléments encastrés, en forme de poches, sont adaptés sur ces ouvertures de manière à isoler de l'extérieur le volume intérieur du rotor. Les couteaux sont montés sur des axes communs à plusieurs d'entre eux. Ces axes s'étendent sur toute la longueur du rotor et traversent les parois latérales des poches. Les couteaux sont articulés sur les segments des axes qui se situent dans les poches, de manière à pouvoir tourner autour. Ainsi, les couteaux de ce rotor peuvent totalement s'escamoter dans les limites du contour extérieur du corps du rotor, lorsqu'ils rencontrent des souches ou d'autres obstacles, afin d'éviter les détériorations de l'ensemble de la machine sous l'effet de surcharges. Toutefois, sur ce rotor, l'utilisateur peut être amené à démonter complètement un axe et tous les couteaux qui sont montés sur celui-ci lorsque l'un de ces couteaux doit être remplacé pour cause d'usure. Ces opérations de démontage et de remontage d'un axe et des couteaux correspondants sont fastidieuses voire pénibles si ledit axe est légèrement déformé.

Sur une autre machine qui est décrite dans le brevet FR 2 741 775, le rotor est constitué par un tube avec des poches comportant une coupelle de fond et des parois latérales. Ces dernières s'étendent vers l'extérieur du tube et portent des axes individuels pour les couteaux. Dans ce cas, les axes et les parties arrière des couteaux se situent constamment en dehors de la périphérie extérieure du rotor. Ils sont ainsi exposés aux chocs avec des souches ou d'autres obstacles pouvant se trouver à la surface du sol. Ces chocs peuvent endommager les couteaux et leurs axes et même détériorer l'ensemble de la machine sous l'effet des surcharges.

La présente invention a pour but de proposer une machine de coupe ne présentant pas les inconvénients des machines connues.

A cet effet, une importante caractéristique de l'invention consiste en ce que chaque couteau est monté sur un axe individuel qui se situe dans une poche en retrait vers l'intérieur par rapport à la périphérie extérieure du rotor et que ce rotor possède sur au moins un côté de chaque poche une empreinte concave pour le montage ou le démontage de l'axe correspondant.

Cet agencement permet le démontage ou le remontage de chaque couteau indépendamment des couteaux voisins. Le remplacement d'un couteau usé est ainsi considérablement facilité. De plus, les parties arrière des couteaux et leurs axes d'articulation sont protégés par la paroi du rotor. Lorsqu'un couteau rencontre un obstacle, il peut entièrement s'escamoter. Le rotor peut ainsi passer sur des obstacles sans que cela provoque des dommages au niveau des couteaux et de leurs axes ou même à l'ensemble de la machine.

Selon une autre caractéristique de l'invention, chaque axe d'articulation d'un couteau comporte un moyen de fixation sur une paroi latérale de la poche correspondante. Ce moyen est avantageusement constitué par un épaulement qui est prévu à l'une des extrémités de l'axe et qui comporte un trou pour le passage d'un organe de fixation. Celui-ci peut être lié à la paroi latérale de la poche de sorte à immobiliser l'épaulement et l'axe correspondant par rapport à ladite poche.

Selon une autre caractéristique de l'invention, un tube de plus petite section est logé dans le rotor. Les poches dans lesquelles sont montés les couteaux sont avantageusement reliées à ce tube. Celui-ci renforce ainsi l'ensemble et évite notamment les déformations du rotor lorsqu'il rencontre un obstacle.

D'autres caractéristiques et avantages de l'invention ressortiront de la description qui va suivre et qui se réfère aux dessins annexés qui représentent, à titre d'exemples non limitatifs, quelques formes de réalisation de l'invention.

Dans ces dessins :
- la figure 1 représente une vue arrière d'une machine selon l'invention en position de travail,
- la figure 2 représente, à plus grande échelle, le rotor de coupe,
- la figure 3 représente une coupe à travers le rotor,
- la figure 4 représente une coupe à travers un rotor selon un autre exemple de réalisation,
- la figure 5 représente une vue partielle du rotor de la figure 4.

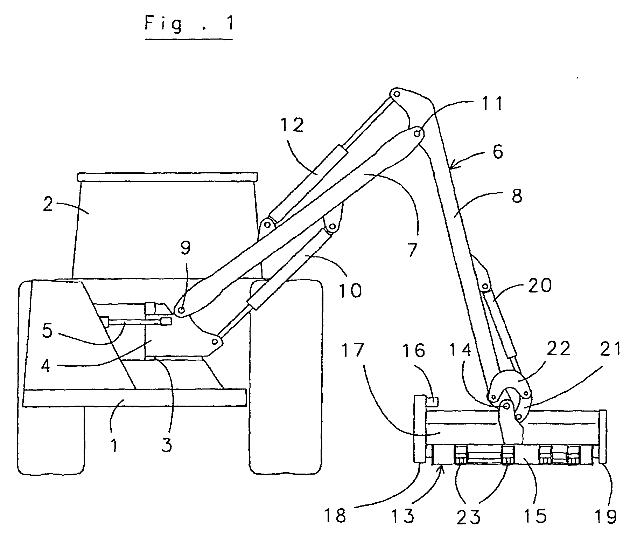

Telle qu'elle est représentée sur la figure 1, la machine de coupe selon l'invention comporte un bâti (1) pouvant être accroché au dispositif de relevage d'un tracteur (2). Le bâti (1) possède un axe (3) sensiblement vertical sur lequel est articulé un support (4). Un vérin hydraulique (5) sensiblement horizontal est relié audit support (4) et permet de le déplacer autour de l'axe (3). Sur ce support (4) est articulé un bras porte-outils (6) qui est réalisé en deux parties (7 et 8) en forme de poutres et qui sont repliables l'une par rapport à l'autre. La partie intérieure (7) est articulée avec son extrémité inférieure sur le support (4) au moyen d'un axe (9) sensiblement horizontal. Elle est déplaçable autour dudit axe (9) à l'aide d'un premier vérin hydraulique (10). La partie extérieure (8) du bras porte-outils (6) est articulée sur la partie intérieure (7) avec un axe (11) sensiblement horizontal. Cette partie extérieure (8) est déplaçable autour de cet axe (11) à l'aide d'un deuxième vérin hydraulique (12). Un mécanisme de coupe (13) est articulé sur l'extrémité libre de la deuxième partie (8) du bras (6) au moyen d'un axe (14) également sensiblement horizontal. Ce mécanisme de coupe (13) se compose notamment d'un rotor (15) avec une grande section qui peut être entraîné en rotation par un moteur hydraulique (16). Il est partiellement entouré d'un capot de protection (17) qui est muni de patins latéraux (18 et 19) pouvant glisser sur le sol. Ledit mécanisme de coupe (13) est déplaçable autour de son axe d'articulation (14) à l'aide d'un troisième vérin hydraulique (20). Celui-ci est articulé sur la partie extérieure (8) du bras (6) et sur un premier levier (21) qui est relié au mécanisme de coupe (13) ainsi qu'un deuxième levier (22) qui est relié à la partie (8) du bras (6). Les vérins hydrauliques (5, 10, 12 et 20) précités sont reliés à une centrale hydraulique qui peut être sur la machine ou sur le tracteur (2). Leurs déplacements sont commandés par l'opérateur au moyen de distributeurs hydrauliques qu'il peut actionner depuis le tracteur (2).

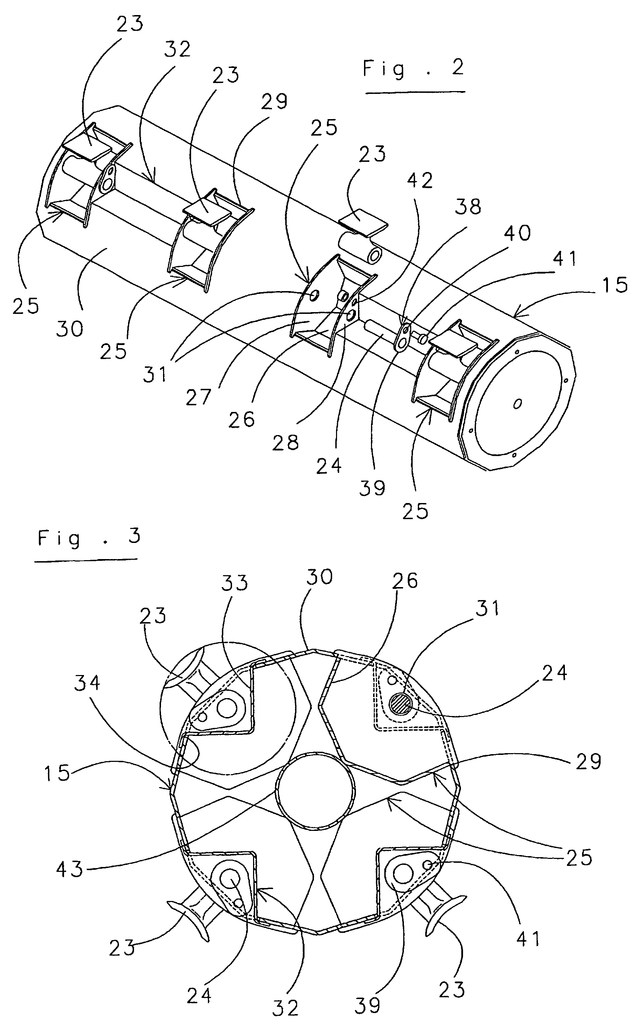

Comme cela ressort notamment des figures 2 et 3, le rotor (15) est en forme de tube avec une importante section cylindrique ou polygonale. Il est muni de couteaux (23) ou fléaux qui sont répartis en quinconce sur sa périphérie. Chacun de ces couteaux (23) est monté sur un axe individuel (24) de manière à pouvoir tourner autour. Cet axe (24) se situe dans une poche (25), en retrait vers l'intérieur par rapport à la périphérie extérieure du rotor (15). Chaque poche (25) est constituée par une coquille (26) et des parois latérales (27 et 28). Ces coquilles (26) et parois latérales (27 et 28) sont logées dans des ouvertures (29) prévues dans la paroi (30) du rotor (15) et sont fixées à ladite paroi. Elles isolent ainsi le volume intérieur du rotor (15) de l'extérieur.

Les parois latérales (27 et 28) des poches (25) comportent dans leurs parties situées à l'intérieur du rotor (15) par rapport à sa périphérie extérieure, des orifices (31) dans lesquels sont montés les axes (24) des couteaux (23). Les parties arrière de ces couteaux (23) se situent ainsi dans les poches (25) et sont protégées par la paroi (30) du rotor (15).

Sur au moins un côté de chaque poche (25), le rotor (15) possède une empreinte concave ou un renfoncement (32). Le fond de cette empreinte (32) se situe légèrement en retrait vers l'intérieur par rapport aux orifices (31) prévus dans les parois latérales (27 et 28) des poches (25). Elle permet ainsi d'accéder de l'extérieur à l'axe (24) pour le montage et le démontage du couteau (23) correspondant. Dans l'exemple selon la figure 3, chaque empreinte (32) est constituée par une pièce emboutie (33) ayant un profil en forme de V. Cette pièce est fixée dans une ouverture (34) prévue dans la paroi (30) du rotor (15). Ladite fixation peut être réalisée par exemple par vissage ou par soudure. Chaque empreinte (32) s'étend avantageusement entre deux poches (25) voisines. Cet agencement permet le montage et le démontage des axes d'articulation (24) de deux couteaux (23) voisins en utilisant la même empreinte (32).

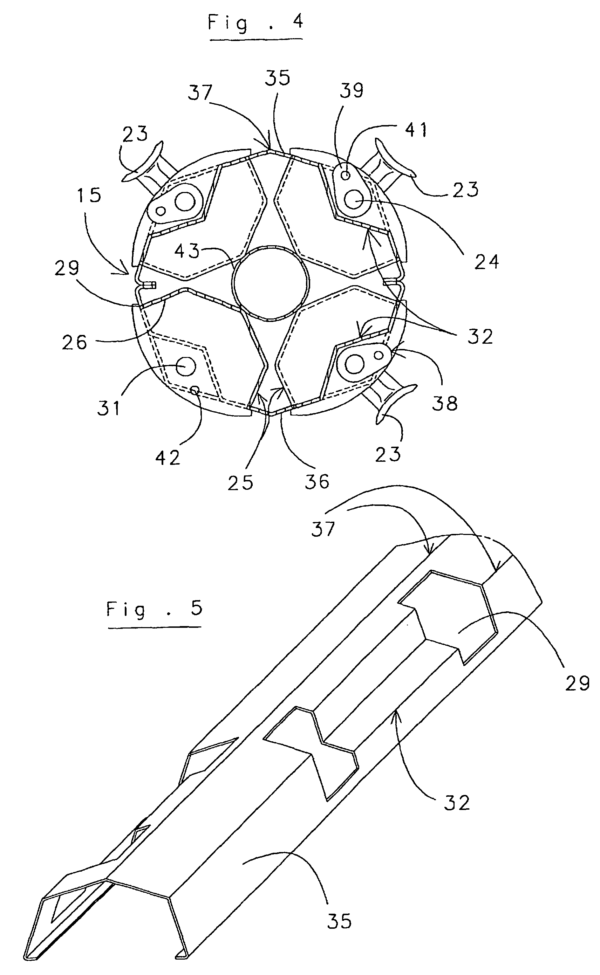

Les empreintes concaves (32) peuvent également être obtenues par emboutissage de la paroi (30) du rotor (15). Ce mode de réalisation est représenté sur les figures 4 et 5. Dans ce cas, le rotor (15) peut être réalisé en deux parties (35 et 36) obtenues par emboutissage. Ces deux parties (35 et 36) sont sensiblement identiques et sont assemblées pour former un tube. Chacune est constituée par une plaque avec des ouvertures (29) pour les poches (25), des emboutissages convexes (37) formant la périphérie extérieure du rotor (15) et des emboutissages concaves constituant les empreintes (32) précitées.

Chaque axe (24) servant à l'articulation d'un couteau (23) comporte un moyen de fixation (38) sur une paroi latérale (27 ou 28) de la poche (25) correspondante. Ce moyen de fixation (38) est constitué par un épaulement (39) à l'une des extrémités de l'axe (24). Cet épaulement (39) peut être soudé sur l'axe (24). Il possède un trou (40) pour le passage d'un organe de fixation (41) tel qu'une vis ou un boulon. Ladite paroi latérale (27 ou 28) de la poche (25) comporte également un trou (42) pour le passage de cet organe de fixation (41). Cela permet de rendre l'épaulement (39) solidaire de la paroi (27 ou 28) de la poche (25) et par conséquent d'immobiliser l'axe (24) dans cette poche (25).

Dans les exemples selon les figures 3 et 4 un tube (43) de plus petite section est logé dans le rotor (15) en vue d'augmenter sa résistance. Ce tube (43) peut avantageusement être cylindrique. Les poches (25) du rotor (15) peuvent être reliées à ce tube (43). A cet effet, les extrémités arrière des coquilles (26) viennent en contact avec le tube (43) et sont vissées ou soudées sur ce dernier.

Durant le travail, le mécanisme de coupe (13) peut être éloigné ou rapproché du tracteur (2) et être déplacé en hauteur au moyen des parties (7 et 8) qui composent le bras (6). Ces parties (7 et 8) sont elles-mêmes déplaçables autour de leurs axes d'articulation (9 et 11) à l'aide du premier vérin hydraulique (10) et du deuxième vérin hydraulique (12). Le troisième vérin hydraulique (20) permet d'orienter le mécanisme de coupe (13) autour de son axe d'articulation (14). Le rotor (15) du mécanisme de coupe (13) est alors entraîné en rotation par le moteur hydraulique (16). Pour la coupe des broussailles ou des arbustes au niveau du sol, le mécanisme (13) glisse sur la surface du sol au moyen des patins (18 et 19). Les couteaux (23) adoptent une position sensiblement radiale sous l'effet de la force centrifuge. Seules leurs extrémités coupantes dépassent de la périphérie du rotor (15). Grâce à son importante section, le rotor (15) a une grande inertie au travail. Il évacue également parfaitement les produits coupés. Les empreintes (32, 37) augmentent l'effet de soufflerie qui est bénéfique dans la fauche d'herbe. Aucun coincement de tiges ne se produit autour des couteaux (23) ou de leurs axes (24).

En cas de rencontre d'un obstacle, les couteaux (23) peuvent s'escamoter autour de leurs axes d'articulation (24) pour éviter les chocs trop importants. Lesdits axes (24) sont parfaitement protégés par la paroi (30 ou 35, 36) du rotor (15) et ne sont pas exposés aux chocs. Le rotor (15) peut aussi facilement franchir les obstacles du fait qu'il ne présente pas de grandes aspérités sur sa périphérie. Le risque d'endommagement de la machine est ainsi considérablement réduit.

D'autre part chaque couteau (23) du rotor (15) qui est usé par le travail est facilement remplaçable. Il suffit de dévisser l'organe de fixation (41) pour libérer l'axe d'articulation (24) correspondant. Celui-ci peut alors être retiré de la poche (25) en le faisant passer dans l'empreinte concave (32) adjacente. Un nouveau couteau (23) peut alors être mis en place et l'axe (24) peut à nouveau être fixé à la paroi latérale (27 ou 28) de la poche (25).

Pour le transport, la partie intérieure (7) du bras (6) peut être dirigée vers le haut à l'aide du premier vérin hydraulique (10) et la deuxième partie (8) peut être repliée vers le bas, autour de son axe (11), au moyen du deuxième vérin hydraulique (12). L'encombrement de l'ensemble est alors réduit.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine de coupe comportant un bâti (1) pouvant être accroché à un tracteur et portant un mécanisme de coupe (13) comprenant un rotor (15) de grande section qui est muni de couteaux (23) qui sont montés sur des axes (24) disposés dans des poches (25) prévues dans ledit rotor (15), ***caractérisée par le fait* que** chaque couteau (23) est monté sur un axe individuel (24) qui se situe dans une poche (25) en retrait vers l'intérieur par rapport à la périphérie extérieure du rotor (15) et que ce rotor (15) possède sur au moins un côté de chaque poche (25) une empreinte concave (32) pour le montage ou le démontage de l'axe (24) correspondant.

2. Machine selon la revendication 1, ***caractérisée par le fait* que** le fond des empreintes concaves (32) se situe légèrement en retrait vers l'intérieur par rapport à l'axe (24) du couteau (23) qui est monté dans la poche (25) correspondante.

3. Machine selon la revendication 1 ou 2, ***caractérisée par le fait* que** les empreintes concaves (32) s'étendent entre deux poches (25) voisines.

4. Machine selon la revendication 1, 2 ou 3, ***caractérisée par le fait* que** les empreintes concaves (32) ont un profil en forme de V.

5. Machine selon l'une quelconque des revendications 1 à 4, ***caractérisée par le fait* que** chaque empreinte concave (32) est constituée par une pièce emboutie (33) qui est logée dans une ouverture (34) de la paroi (30) du rotor (15).

6. Machine selon l'une quelconque des revendications 1 à 4, ***caractérisée par le fait* que** les empreintes concaves (32) sont réalisées par emboutissage de la paroi (30) du rotor (15).

7. Machine selon l'une quelconque des revendications 1 à 6, ***caractérisée par le fait* que** le rotor (15) est réalisé en deux parties (35 et 36) assemblées pour former un tube.

8. Machine selon la revendication 7, ***caractérisée par le fait* que** chaque partie (35 et 36) comporte des découpes (29) pour la fixation des poches (25), des emboutissages concaves constituant les empreintes (32) et des emboutissages convexes (37) formant la périphérie extérieure du rotor (15).

9. Machine selon l'une quelconque des revendications précédentes, ***caractérisée par le fait* que** chaque axe (24) comporte un moyen de fixation (38) sur une paroi latérale (27 ou 28) de la poche (25) correspondante.

10. Machine selon la revendication 9, ***caractérisée par le fait* que** le moyen de fixation (38) est constitué par un épaulement (39) à l'une des extrémités de l'axe (24), lequel épaulement comporte un trou (40) pour le passage d'un organe de fixation (41).

11. Machine selon l'une quelconque des revendications précédentes, ***caractérisée par le fait*** qu**'**un tube (43) de plus petite section est logé dans le rotor (15) et que les poches (25) sont reliées à ce tube (43).

12. Machine selon la revendication 11, ***caractérisée par le fait* que** les poches (25) sont fixées au tube (43).

## Patentansprüche

1. Schneidmaschine mit einem Rahmen (1), der an einem Schlepper angehängt werden kann und einen Schneidmechanismus (13) trägt, der einen Rotor (15) mit großem Querschnitt umfasst, der mit Messern (23) versehen ist, die auf in im Rotor (15) vorgesehenen Taschen (25) angeordneten Achsen (24) angebracht sind, ***dadurch gekennzeichnet,* dass** jedes Messer (23) auf einer einzelnen Achse (24) angebracht ist, die sich in einer bezüglich des Außenumfangs des Rotors (15) nach innen eingelassenen Tasche (25) befindet, und dass dieser Rotor (15) auf mindestens einer Seite jeder Tasche (25) eine konkave Vertiefung (32) für das Montieren oder Demontieren der entsprechenden Achse (24) besitzt.

2. Maschine nach Anspruch 1, ***dadurch gekennzeichnet,* dass** der Grund der konkaven Vertiefungen (32) bezüglich der Achse (24) des Messers (23), das in der entsprechenden Tasche (25) angebracht ist, leicht zum Inneren zurückspringt.

3. Maschine nach Anspruch 1 oder 2, ***dadurch gekennzeichnet,* dass** sich die konkaven Vertiefungen (32) zwischen zwei benachbarten Taschen (25) erstrecken.

4. Maschine nach Anspruch 1, 2 oder 3, ***dadurch gekennzeichnet,* dass** die konkaven Vertiefungen (32) ein V-förmiges Profil aufweisen.

5. Maschine nach irgend einem der Ansprüche 1 bis 4, ***dadurch gekennzeichnet,* dass** jede konkave Vertiefung (32) aus einem tiefgezogenen Teil (33) besteht, das in einer Öffnung (34) der Wand (30) des Rotors (15) aufgenommen ist.

6. Maschine nach irgend einem der Ansprüche 1 bis 4, ***dadurch gekennzeichnet*, dass** die konkaven Vertiefungen (32) durch Tiefziehen der Wand (30) des Rotors (15) hergestellt sind.

7. Maschine nach irgend einem der Ansprüche 1 bis 6, ***dadurch gekennzeichnet*, dass** der Rotor (15) aus zwei Teilen (35 und 36) hergestellt ist, die zur Bildung eines Rohrs zusammengefügt sind.

8. Maschine nach Anspruch 7, ***dadurch gekennzeichnet*, dass** jeder Teil (35 und 36) Ausschnitte (29) zur Befestigung der Taschen (25), konkave Tiefziehungen, die die Vertiefungen (32) bilden, und konvexe Tiefziehungen (37), die den Außenumfang des Rotors (15) bilden, aufweist.

9. Maschine nach irgend einem der vorhergehenden Ansprüche, ***dadurch gekennzeichnet,* dass** jede Achse (24) ein Mittel (38) zur Befestigung an einer Seitenwand (27 oder 28) der entsprechenden Tasche (25) aufweist.

10. Maschine nach Anspruch 9, ***dadurch gekennzeichnet,* dass** das Befestigungsmittel (38) durch eine Schulter (39) an einem der Enden der Achse (24) gebildet wird, wobei die Schulter ein Loch (40) für den Durchgang eines Befestigungsglieds (41) aufweist.

11. Maschine nach irgend einem der vorhergehenden Ansprüche, ***dadurch gekennzeichnet*, dass** ein Rohr (43) kleineren Querschnitts im Rotor (15) untergebracht ist und dass die Taschen (25) mit diesem Rohr (43) verbunden sind.

12. Maschine nach Anspruch 11, ***dadurch gekennzeichnet*, dass** die Taschen (25) am Rohr (43) befestigt sind.

## Claims

1. Cutting machine comprising a frame (1) which can be hitched to a tractor and carries a cutting mechanism (13) comprising a large cross section rotor (15) equipped with knives (23) which are mounted on axes (24) arranged in pockets (25) provided in said rotor (15), ***characterized in* that** each knive (23) is mounted on an individual axis (24) located in a pocket (25) set back toward the inside with respect to the exterior periphery (15) of the rotor and **in that** this rotor (15), on at least one side of each pocket (25), has a concave recess (32) for fitting or removing the corresponding axis (24).

2. Machine according to Claim 1, ***characterized in* that** the bottom of the concave recesses (32) lies slightly set back toward the inside with respect to the axis (24) of the knive (23) which is mounted in the corresponding pocket (25).

3. Machine according to Claim 1 or 2, ***characterized in* that** the concave recesses (32) extend between two adjacent pockets (25).

4. Machine according to Claim 1, 2 or 3, ***characterized in* that** the concave recesses (32) have a V-shaped profile.

5. Machine according to any one of Claims 1 to 4, ***characterized in* that** each concave recess (32) consists of a pressed part (33) which is housed in an opening (34) in the wall (30) of the rotor (15).

6. Machine according to any one of Claims 1 to 4, ***characterized in* that** the concave recesses (32) are made by pressing the wall (30) of the rotor (15).

7. Machine according to any one of Claims 1 to 6, ***characterized in* that** the rotor (15) is made in two parts (35 and 36) which are assembled in order to form a tube.

8. Machine according to Claim 7, ***characterized in* that** each part (35 and 36) has cutouts (29) for fixing the pockets (25), concave stampings constituting the recesses (32) and convex stampings (37) forming the outer periphery of the rotor (15).

9. Machine according to any one of the preceding claims, ***characterized in* that** each axis (24) has a means (38) for fixing it to a side wall (27 or 28) of the corresponding pocket (25).

10. Machine according to Claim 9, ***characterized in* that** the fixing means (38) consists of a shoulder (39) at one of the ends of the axis (24), which shoulder has a hole (40) for the passage of a fixing member (41).

11. Machine according to any one of the preceding claims, ***characterized in* that** a tube (43) of smaller cross section is housed in the rotor (15) and **in that** the pockets (25) are connected to this tube (43).

12. Machine according to Claim 11, ***characterized in* that** the pockets (25) are fixed to the tube (43).
